# EUROPÄISCHE PATENTANMELDUNG

(11) **EP 2 273 142 A1**
(43) Veröffentlichungstag der Anmeldung: **12.01.2011**
(21) Anmeldenummer: 10168205.2
(22) Anmeldetag: 02.07.2010
(51) Int. Cl.: F16D 1/033, F16D 1/076

(54) **Wellenkupplung einer Wasserkraftanlage**

(30) Priorität: 08.07.2009 DE 102009032239
(71) Anmelder: Aktiebolaget SKF, 41 550 Göteborg (SE)
(72) Erfinder: Schulz, Ingo, 97447 Gerolzhofen (DE); Kern, Henning, 97080 Würzburg (DE)
(74) Vertreter: Schonecke, Mitja

(57) **Zusammenfassung**

Die Erfindung betrifft eine Wellenkupplung (1) einer Wasserkraftanlage, die eine erste rotierende Komponente (5, 10) mittels Reibschluss drehfest mit einer zweiten rotierenden Komponente (4, 9) verbindet. Die erfindungsgemäße Wellenkupplung (1) weist ein erstes axiales Endstück (14) mit einer ersten axialen Endfläche (17), ein zweites axiales Endstück (15) mit einer zweiten axialen Endfläche (18) und ein Zwischenstück (13) auf, das axial zwischen dem ersten axialen Endstück (14) und dem zweiten axialen Endstück (15) angeordnet ist. An der ersten axialen Endfläche (17) liegt ein erstes Reibelement (26) an, das wenigstens bereichsweise radial nach innen über das Zwischenstück (13) übersteht und/oder an der zweiten axialen Endfläche (18) liegt ein zweites Reibelement (29) an, das wenigstens bereichsweise radial nach außen über das Zwischenstück (13) übersteht.

## Beschreibung

Die Erfindung betrifft eine Wellenkupplung einer Wasserkraftanlage. Weiterhin betrifft die Erfindung eine Wasserkraftanlage mit einer Wellenkupplung und eine Verwendung einer Wellenkupplung in einer Wasserkraftanlage.

Bei einer Wasserkraftanlage wird mittels Wasserkraft eine Turbine in Rotation versetzt und zur Stromerzeugung von der Turbine ein Generator angetrieben. Dabei ist es erforderlich, die Drehbewegung der Turbine auf einen Generator zu übertragen und diesen in Rotation zu versetzen. Dies kann entweder unmittelbar oder durch ein dazwischen geschaltetes Übersetzungsgetriebe zur Drehzahlanpassung erfolgen. In beiden Fällen wird die Drehbewegung mittels Wellen übertragen. Wenn die Turbine und der Generator nicht über eine gemeinsame durchgehende Welle verfügen, wird wenigstens eine Wellenkupplung benötigt, welche aufeinander folgende Wellenstücke drehfest miteinander verbindet oder eine drehfeste Verbindung zwischen einer Welle und einem sonstigen Anschlussstück ausbildet.

Die Ausbildung der Verbindung kann jeweils durch Verschrauben erfolgen. Da bei einer Wasserkraftanlage aber extrem hohe Drehmomente auftreten können, ist es mitunter sehr schwierig, die Schraubverbindungen zuverlässig zu qualifizieren. Außerdem sind bekannte Wellenkupplungen in der Regel nicht für einen Einsatz unter Wasser geeignet und daher bei einer Wasserkraftanlage nur mit Einschränkungen einsetzbar. Ein weiteres Hindernis beim Einsatz bekannter Wellenkupplungen in einer Wasserkraftanlage kann in dem in der Regel ungünstigen Strömungsquerschnitt bestehen, der sich beispielsweise negativ auf den Wirkungsgrad auswirken kann.

Der Erfindung liegt die Aufgabe zugrunde, zwei rotierende Komponenten einer Wasserkraftanlage drehfest miteinander zu verbinden.

Diese Aufgabe wird durch eine Wellenkupplung gemäß Anspruch 1 sowie durch eine Wasserkraftanlage gemäß Anspruch 14 gelöst.

Die erfindungsgemäße Wellenkupplung einer Wasserkraftanlage verbindet eine erste rotierende Komponente mittels Reibschluss drehfest mit einer zweiten rotierenden Komponente und weist ein erstes axiales Endstück mit einer ersten axialen Endfläche, ein zweites axiales Endstück mit einer zweiten axialen Endfläche sowie ein Zwischenstück auf, das axial zwischen dem ersten axialen Endstück und dem zweiten axialen Endstück angeordnet ist. An der ersten axialen Endfläche liegt ein erstes Reibelement an, das wenigstens bereichsweise radial nach innen über das Zwischenstück übersteht und/oder an der zweiten axialen Endfläche liegt ein zweites Reibelement an, das wenigstens bereichsweise radial nach außen über das Zwischenstück übersteht.

Die erfindungsgemäße Wellenkupplung hat den Vorteil, dass sie zwei rotierende Komponenten einer Wasserkraftanlage zuverlässig miteinander verbindet und in der Lage ist, trotz eines kompakten Aufbaus sehr hohe Drehmomente, Biegemomente und Axialkräfte zu übertragen. Besonders vorteilhaft ist es dabei, dass die Wellenkupplung sehr genau spezifiziert werden kann und somit ein Einsatz auch ohne umfangreiche Vorversuche möglich ist.

Das erste Reibelement und/oder das zweite Reibelement können als ein abnehmbarer Reibkörper ausgebildet sein. Dies ermöglicht einen einfachen Austausch der

Reibelemente. Insbesondere können das erste Reibelement und/oder das zweite Reibelement in Umfangsrichtung segmentiert ausgebildet sein. Dies erleichtert die Montage und Demontage der Wellenkupplung und ermöglicht einen Austausch der Reibelemente ohne vollständige Demontage der Wellenkupplung. Ebenso ist es auch möglich, dass das erste Reibelement und/oder das zweite Reibelement in Umfangsrichtung geschlossen ausgebildet sind. Weiterhin können das erste Reibelement und/oder das zweite Reibelement als eine Beschichtung ausgebildet sein. Insbesondere kann die Beschichtung auf die erste axiale Endfläche der Wellenkupplung oder auf die erste rotierende Komponente und auf die zweite axiale Endfläche der Wellenkupplung oder auf die zweite rotierende Komponente aufgebracht sein. Bei einer derartigen Ausgestaltung fällt bei der Montage bzw. Demontage der Wellenkupplung kein zusätzlicher Montage- bzw. Demontageaufwand für die Reibelemente an.

Das erste Reibelement kann radial nach außen durch eine erste Dichtung und/oder das zweite Reibelement radial nach außen durch eine zweite Dichtung abgedichtet sein. Auf diese Weise kann verhindert werden, dass die mit den Reibelementen erzielten Reibwerte durch eindringendes Wasser verändert werden oder dass es zu einer sonstigen Schädigung der Reibelemente oder der daran angrenzenden Oberflächen kommt.

Das erste axiale Endstück, das zweite axiale Endstück und das Zwischenstück sind vorzugsweise einteilig ausgebildet. Insbesondere kann das erste axiale Endstück als ein erster Flansch ausgebildet sein, der wenigstens bereichsweise radial nach innen über das Zwischenstück übersteht. Dies ermöglicht eine Verschraubung im Inneren der Wellenkupplung und dadurch eine in Radialrichtung sehr kompakte Ausführung der Wellenkupplung. Außerdem wird dadurch die Möglichkeit eröffnet, Befestigungsschrauben von der Seite der Wellenkupplung aus zu positionieren, so dass diesbezüglich keine Abforderungen an die Ausgestaltung der rotierenden Komponenten zu stellen sind und diese insbesondere keine Befestigungsflansche aufweisen müssen. Weiterhin können im ersten axialen Endstück in Unfangsrichtung aufeinander folgend erste axiale Durchgangsbohrungen ausgebildet sein.

Das zweite axiale Endstück kann insbesondere als ein zweiter Flansch ausgebildet sein, der wenigstens bereichsweise radial nach außen über das Zwischenstück übersteht. Dies ermöglicht wiederum eine Positionierung von Befestigungsschrauben von der Seite der Wellenkupplung aus. Im zweiten axialen Endstück können in Umfangsrichtung aufeinander folgend zweite axiale Durchgangsbohrungen ausgebildet sein.

Über den Außenumfang des Zwischenstücks verteilt können mehrere Vertiefungen ausgebildet sein, die mit den zweiten Durchgangsbohrungen axial fluchten. Dies erleichtert das Einführen der Befestigungsschrauben in die Durchgangsbohrungen und ermöglicht einen großen Außendurchmesser des Zwischenstücks und demgemäß eine hohe mechanische Stabilität der Wellenkupplung. Weiterhin können über den Außenumfang des Zwischenstücks verteilt mehrere axial verlaufende Versteifungsrippen ausgebildet sein. Auf diese Weise lässt sich die mechanische Stabilität der Wellenkupplung noch weiter erhöhen.

Die erste rotierende Komponente und die zweite rotierende Komponente können unterschiedliche Durchmesser aufweisen.

Das erste axiale Endstück, das zweite axiale Endstück und das Zwischenstück sind vorzugsweise aus einem nicht rostenden Edelstahl gefertigt. Auf diese Weise kann eine Beschädigung durch Korrosion auch dann verhindert werden, wenn die Wellenkupplung mit Wasser in Berührung kommt. Weiterhin ist die erfindungsgemäße Wellenkupplung vorzugsweise so ausgebildet, dass eine aus der ersten axialen Endfläche und dem ersten Reibelement und/oder eine aus der zweiten axialen Endfläche und dem zweiten Reibelement ausgebildete Reibpaarung einen Reibwert von wenigstens 0,65 aufweist. Der Reibwert kann insbesondere auch wenigstens 0,75 oder sogar wenigstens 0,8 betragen. Derart hohe Reibwerte haben den Vorteil, dass sie eine Übertragung hoher Momente über vergleichsweise kleine Flächen ermöglichen.

Die erste rotierende Komponente und die zweite rotierende Komponente können jeweils als eine Welle, beispielsweise eine Turbinenwelle, eine Getriebeeingangswelle, eine Getriebeausgangswelle oder eine Generatorwelle, ausgebildet sein.

Die Erfindung betrifft weiterhin eine Wasserkraftanlage mit einer ersten rotierenden Komponente und einer zweiten rotierenden Komponente, die mittels der erfindungsgemäßen Wellenkupplung drehfest miteinander verbunden sind. Dabei kann die Wellenkupplung so ausgebildet sein, dass ihr maximaler Außendurchmesser kleiner oder gleich dem Außendurchmesser der ersten rotierenden Komponente oder der zweiten rotierenden Komponente ist. Eine derartige Ausgestaltung hat bei einer Einbausituation unter Wasser den Vorteil, dass die Strömungsverhältnisse durch die Wellenkupplung allenfalls geringfügig beeinträchtigt werden.

Die Wellenkupplung kann aus zueinander entgegen gesetzten Richtungen mit der ersten rotierenden Komponente und der zweiten rotierenden Komponente verschraubt sein. Diese Art der Verschraubung ermöglicht eine in Radialrichtung sehr kompakte Ausbildung der Wellenkupplung.

Die Erfindung betrifft außerdem eine Verwendung einer Wellenkupplung zur drehfesten Verbindung einer ersten rotierenden Komponente und einer zweiten rotierenden Komponente einer Wasserkraftanlage mittels Reibschluss. Dabei weist die Wellenkupplung ein erstes Reibelement auf, das an einer ersten axialen Endfläche der Wellenkupplung anliegt und/oder ein zweiten Reibelement, das an einer zweiten axialen Endfläche der Wellenkupplung anliegt.

Die Wellenkupplung ist insbesondere für eine Verwendung an einen Einbauort vorgesehen, an dem sie mit Wasser benetzt wird oder ganz oder teilweise unter Wasser angeordnet ist.

Die Erfindung wird nachstehend anhand der in der Zeichnung dargestellten Ausführungsbeispiele erläutert.

Es zeigen
- Figur 1: ein Ausführungsbeispiel einer Wasserkraftanlage mit einer erfin- dungsgemäß ausgebildeten Wellenkupplung in einer schematischen Darstellung,
- Figur 2: ein Ausführungsbeispiel der Wellenkupplung in perspektivischer Darstellung,
- Figur 3: das in Figur 2 dargestellte Ausführungsbeispiel der Wellenkupp- lung in vollständig montiertem Zustand in Aufsicht,
- Figur 4: das in Figur 3 dargestellte Ausführungsbeispiel der Wellenkupp- lung in Schnittdarstellung,
- Figur 5: das in Figur 3 dargestellte Ausführungsbeispiel der Wellenkupp- lung in einer weiteren Schnittdarstellung,
- Figur 6: eine ausschnittsweise Vergrößerung der Figur 5,
- Figur 7: das in Figur 3 dargestellte Ausführungsbeispiel der Wellenkupp- lung in einer weiteren Schnittdarstellung und
- Figur 8: eine ausschnittsweise Vergrößerung der Figur 7.

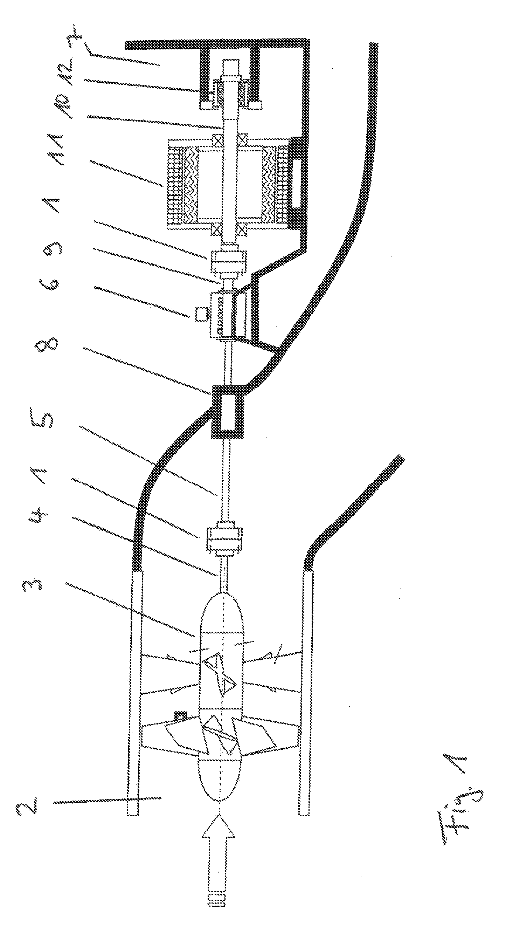

Figur 1 zeigt ein Ausführungsbeispiel einer Wasserkraftanlage mit einer erfindungsgemäß ausgebildeten Wellenkupplung 1 in einer schematischen Darstellung.

In einem Wasserkanal 2 ist eine Turbine 3 angeordnet, die eine Turbinenwelle 4 aufweist. Die Turbinenwelle 4 ist über die Wellenkupplung 1 drehfest mit einer Getriebeeingangswelle 5 eines Getriebes 6 verbunden. Die Turbine 3, die Turbinenwelle, 4 die Wellenkupplung 1 und ein Teilabschnitt der Getriebeeingangswelle 5 sind innerhalb des Wasserkanals 2 angeordnet und werden vom Wasser, das durch den Wasserkanal 2 strömt, benetzt. Das Getriebe 6 und weitere Komponenten der Wasserkraftanlage sind außerhalb des Wasserkanals 2, d. h. in einem Trockenbereich 7, beispielsweise einer Maschinenhalle usw. angeordnet. Der Übergang zwischen dem Wasserkanal 2 und dem Trockenbereich 7 erfolgt mittels einer Durchführung 8, durch welche die Getriebeeingangswelle 5 hindurchgeführt ist. Auf der von der Durchführung 8 abgewandten Seite weist das Getriebe 6 eine Getriebeausgangswelle 9 auf. Die Getriebeausgangswelle 9 ist mittels einer weiteren Wellenkupplung 1 mit einer Generatorwelle 10 eines Generators 11 verbunden. Im weiteren Verlauf ist die Generatorwelle 10 in einem Ausgleichslager gelagert. Sämtliche Wellen können insbesondere als Hohlwellen ausgebildet sein.

Im Betriebszustand der Wasserkraftanlage strömt Wasser in einer durch einen Pfeil veranschaulichten Richtung durch den Wasserkanal 2 und treibt dabei die Turbine 3 an, so dass die Turbinenwelle 4 in Rotation versetzt wird. Diese Rotationsbewegung wird über die Wellenkupplung 1 auf die Getriebeeingangswelle 5 übertragen und durch das Getriebe 6 in eine Rotationsbewegung der Getriebeausgangswelle 9 umgesetzt. Die Getriebeausgangswelle 9 treibt über die Wellenkupplung 1 die Generatorwelle 10 und somit den Generator 11 an, mit dessen Hilfe aus der Rotationsbewegung ein elektrischer Strom erzeugt wird. Das Getriebe 6 kann ein Übersetzungsverhältnis ungleich 1:1 besitzen, um eine Drehzahlanpassung zwischen der Turbine 3 und dem Generator 11 vorzunehmen, so dass beide Komponenten in dem jeweils für sie optimalen Drehzahlbereich betrieben werden können. Demgemäß können die Getriebeeingangswelle 5 und die Getriebeausgangswelle 9 mit unterschiedlichen Drehzahlen rotieren.

Die Wasserkraftanlage kann beispielsweise an einem Flusslauf angeordnet sein. Bei einem Standort in Küstennähe kann das Wasser im Wasserkanal 2 einen nicht unerheblichen Salzgehalt aufweisen, so dass bei der Auswahl der Materialien für die im Wasserkanal 2 angeordneten Komponenten auf eine ausreichende Korrosionsbeständigkeit zu achten ist. Dies gilt insbesondere auch für die Wellenkupplung 1, die beispielsweise aus einem nicht rostenden Edelstahl gefertigt sein kann. Wie im Folgenden noch näher erläutert wird, ist es außerdem wichtig, dass die Wellenkupplung 1 keinen allzu großen Strömungswiderstand aufweist, damit die Wasserströmung im Wasserkanal 2 nicht unzulässig stark gestört wird.

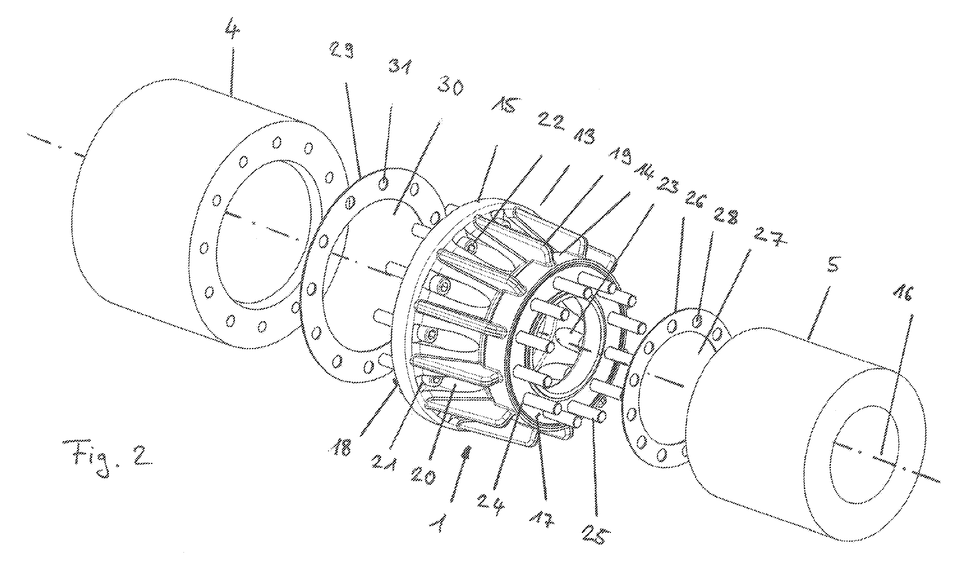

Figur 2 zeigt ein Ausführungsbeispiel der Wellenkupplung 1 in perspektivischer Darstellung. Die Wellenkupplung 1 weist ein kreisringförmig ausgebildetes Zwischenstück 13 auf. An einem axialen Ende des Zwischenstücks 13 ist ein kleiner Flansch 14, am anderen axialen Ende ein großer Flansch 15 ausgebildet. Der Begriff axial bezieht sich dabei auf eine Längsachse 16 der Wellenkupplung 1, die mit den Rotationsachsen der an der Wellenkupplung 1 befestigten Turbinenwelle 4 und Getriebeeingangswelle 5 zusammenfällt. Der kleine Flansch 14 weist eine axiale Endfläche 17 auf und steht radial nach innen über das Zwischenstück 13 über. Der große Flansch 15 weist eine axiale Endfläche 18 auf und steht radial nach außen über das Zwischenstück 13 über.

Äquidistant über den Außenumfang des Zwischenstücks 13 verteilt erstrecken sich ausgehend vom großen Flansch 15 mehrere Versteifungsrippen 19 in Axialrichtung. Zwischen benachbarten Versteifungsrippen 19 ist jeweils eine axial verlaufende Vertiefung 20 in der äußeren Mantelfläche des Zwischenstücks 13 ausgebildet, die in eine axiale Durchgangsbohrung 21 im großen Flansch 15 mündet. In jeder Durchgangsbohrung 21 ist eine Schraube 22 angeordnet, wobei die Schrauben 22 so orientiert sind, dass ihre Köpfe dem kleinen Flansch 14 zugewandt sind.

Im Bereich der Bohrungsfläche des Zwischenstücks sind mehrere axial verlaufende Vertiefungen 23 ausgebildet, die in Umfangsrichtung äquidistant verteilt sind und jeweils in eine axiale Durchgangsbohrung 24 im kleinen Flansch 14 münden. In jeder Durchgangsbohrung 24 des kleinen Flansches 14 ist eine Schraube 25 angeordnet, wobei die Schrauben 25 so orientiert sind, dass ihre Köpfe dem großen Flansch 15 zugewandt sind. Dies bedeutet, dass die Köpfe der Schrauben 25 innerhalb der Bohrung des Zwischenstücks 13 angeordnet sind.

Axial zwischen dem kleinen Flansch 14 des Zwischenstücks 13 und der Getriebeeingangswelle 5 ist ein Reibelement 26 angeordnet, das als eine Kreisscheibe mit einer großen zentralen Lochung 27 ausgebildet ist. Außerdem weist das Reibelement 26 mehrere in Umfangsrichtung äquidistant verteilte Lochungen 28 auf, die wesentlich kleiner als die zentrale Lochung 27 sind und mit den axialen Durchgangsbohrungen 24 des kleinen Flansches 14 fluchten.

Axial zwischen dem großen Flansch 15 des Zwischenstücks 13 und der Turbinenwelle 4 ist ein Reibelement 29 angeordnet, das analog zum Reibelement 26 eine zentrale Lochung 30 und mehrere in Umfangsrichtung äquidistant verteilte Lochungen 31 aufweist, die mit den axialen Durchgangsbohrungen 21 des großen Flansches 15 fluchten.

Die Reibelemente 26 und 29 können jeweils in Umfangsrichtung geschlossen ausgebildet oder aus mehreren Segmenten zusammengesetzt sein und bestehen aus einem Material, das in Zusammenwirkung mit dem Material der Turbinenwelle 4 bzw. der Getriebeeingangswelle 5 einen sehr hohen Reibungskoeffizienten aufweist. Insbesondere beträgt der Reibungskoeffizient wenigstens 0,65, vorzugsweise wenigstens 0,75 oder sogar wenigstens 0,8. Die Materialzusammensetzung wird im Folgenden noch näher erläutert.

Aus Gründen der Anschaulichkeit ist die Wellenkupplung 1 in Figur 2 nicht in einem vollständig montierten Zustand dargestellt. Stattdessen sind die Reibelemente 26, 29 in einem axialen Abstand zu den restlichen Komponenten der Wellenkupplung 1 und auch zu der Turbinenwelle 4 und der Getriebeeingangswelle 5 dargestellt.

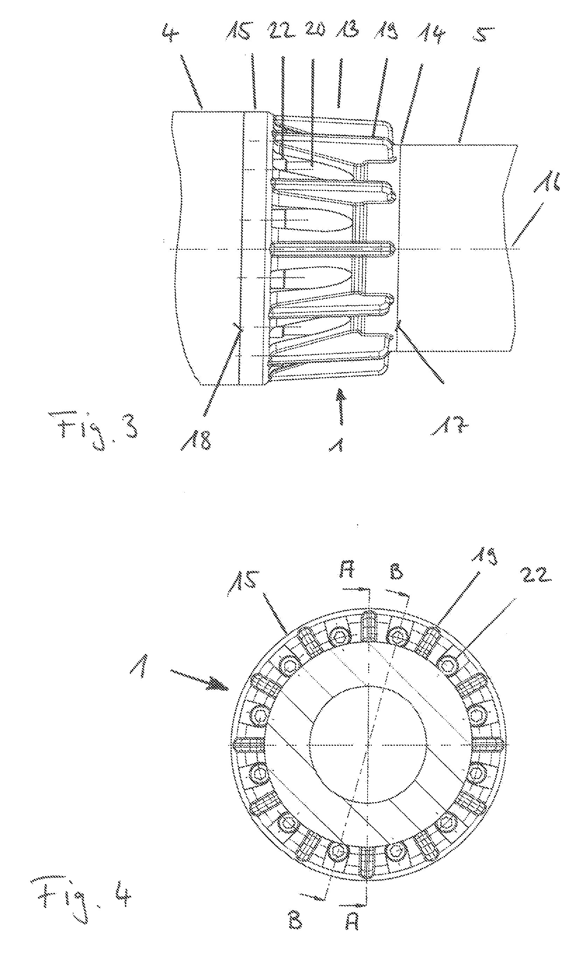

Die Montage der Wellenkupplung 1 wird anhand der Figuren 3 bis 8 erläutert. Diese Figuren zeigen die Wellenkupplung 1 jeweils in einem vollständig montierten Zustand.

Figur 3 zeigt das in Figur 2 dargestellte Ausführungsbeispiel der Wellenkupplung 1 in vollständig montiertem Zustand in Aufsicht. Die Geometrie der Wellenkupplung 1 ist so auf die Turbinenwelle 4 und die Getriebeeingangswelle 5 abgestimmt, dass der Außenumfang des großen Flansches 15 der Wellenkupplung 1 mit dem Außenumfang der Turbinenwelle 4 und der Außenumfang des kleinen Flansches 14 der Wellenkupplung 1 mit dem Außenumfang der Getriebeeingangswelle 5 fluchten. Da der Radius der Wellenkupplung 1 im Bereich des großen Flansches 15 seinen Maximalwert annimmt, bedeutet dies zudem, dass die Wellenkupplung 1 an keiner Stelle radial über die Turbinenwelle 4 übersteht.

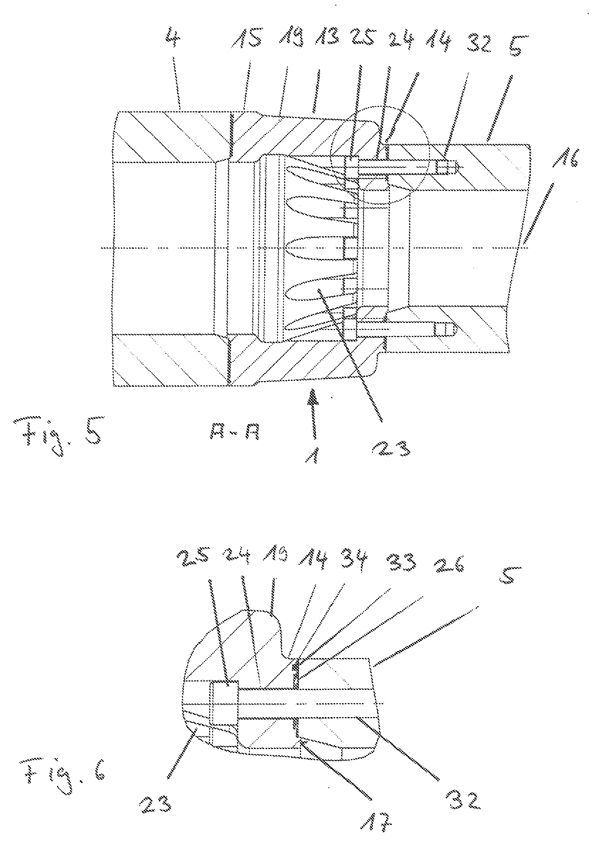

Figur 4 zeigt das in Figur 3 dargestellte Ausführungsbeispiel der Wellenkupplung 1 in Schnittdarstellung. Die in Figur 4 gewählte Schnittebene verläuft senkrecht zur Längsachse 16 der Wellenkupplung 1. In der Darstellung der Figur 4 sind insbesondere der große Flansch 15, die Schrauben 22 und die Versteifungsrippen 19 zu erkennen. Außerdem sind die Schnittlinien AA und BB der in den Figuren 5 bis 8 dargestellten Schnitte eingezeichnet.

Figur 5 zeigt das in Figur 3 dargestellte Ausführungsbeispiel der Wellenkupplung 1 in einer weiteren Schnittdarstellung. Ein vergrößerter Ausschnitt der Figur 5 ist in Figur 6 dargestellt. In den Figuren 5 und 6 ist der Schnitt jeweils entlang der in Figur 4 eingezeichneten Linie AA geführt. Dies bedeutet, dass die Verschraubung des kleinen Flansches 14 der Wellenkupplung 1 mit der Getriebeeingangswelle 5 sichtbar ist. Diese Verschraubung wird durch die Schrauben 25 ausgebildet, die durch die axialen Durchgangsbohrungen 24 des kleinen Flansches 14 geführt sind und in Gewindebohrungen 32 der Getriebeeingangswelle 5 eingeschraubt sind.

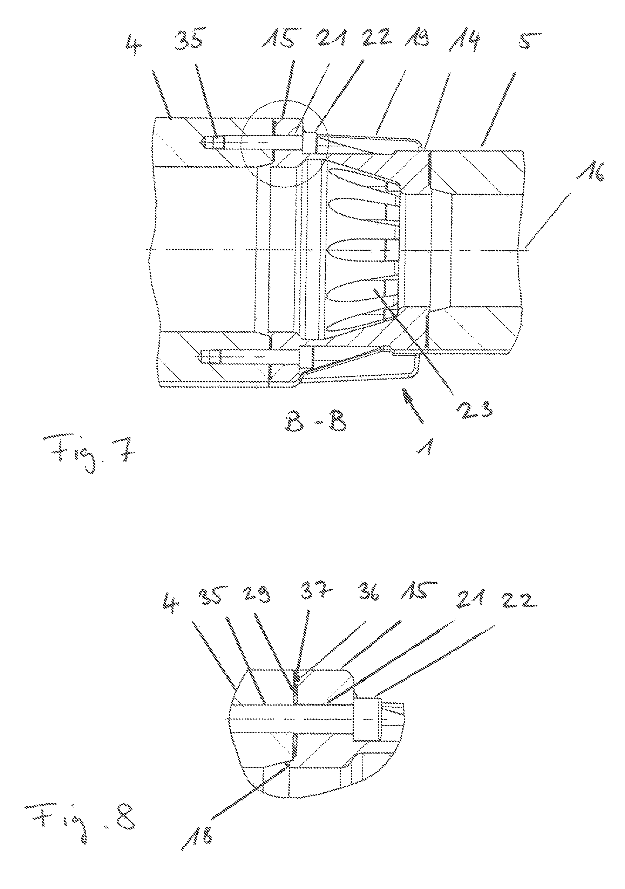

Die Verschraubung des großen Flansches 15 der Wellenkupplung 1 mit der Turbinenwelle 4 ist in den Figuren 7 und 8 dargestellt.

Insbesondere in der Detaildarstellung der Figur 6 ist erkennbar, dass ein Dichtring 33 in einer radial außerhalb des Reibelements 26 umlaufenden Nut 34 des kleinen Flansches 14 angeordnet ist und axial gegen die benachbarte Stirnfläche der Getriebeeingangswelle 5 gepresst wird. Auf diese Weise wird sichergestellt, dass bei einem Einsatz der Wellenkupplung 1 unter Wasser kein Wasser in den Bereich des Reibelements 26 oder in das Innere der Wellenkupplung 1 eindringen kann.

Eine drehfeste Verbindung zwischen der Turbinenwelle 4 und der Getriebeeingangswelle 5 kann auf folgende Weise hergestellt werden:

Der kleine Flansch 14 der Wellenkupplung 1 wird dem freien axialen Ende der Getriebeeingangswelle 5 angenähert. Dabei ist darauf zu achten, dass das Reibelement 26 im Bereich der axialen Endfläche 17 des kleinen Flansches 14 oder im Bereich der Stirnfläche der Getriebeeingangswelle 5 angeordnet ist und der Dichtring 33 in die Nut 34 eingelegt ist. Durch Einfädeln der Schrauben 25 in die axialen Durchgangsbohrungen 24 des kleinen Flansches 14 und die Lochungen 28 des Reibelements 26 kann das Reibelement 26 provisorisch am kleinen Flansch 14 fixiert werden, um die Montage zu erleichtern. Zusätzlich oder alternativ sind auch andere Arten der Fixierung des Reibelements 26 wie beispielsweise Kleben oder Einklemmen in dafür vorgesehene Halteabschnitte usw. möglich. Ebenso ist es auch möglich, das Reibelement 26 als eine Beschichtung auf die axiale Endfläche 17 des kleinen Flansches 14 oder auf die Stirnfläche der Getriebeeingangswelle 5 aufzubringen. Des weiteren ist auch eine Montage ohne eine Fixierung des Reibelements 26 am kleinen Flansch 14 oder an der Getriebeeingangswelle 5 möglich. In diesem Fall kann das Reibelement 26 beispielsweise mittels einer Haltevorrichtung in einer geeigneten Montageposition angeordnet werden.

Sobald der Dichtring 33 die Getriebeeingangswelle 5 berührt oder auch bereits davor werden die Schrauben 25 durch die axialen Durchgangsbohrungen 24 des kleinen Flansches 14 und die Lochungen 28 des Reibelements 26 hindurchgeführt und in die Gewindebohrungen 32 der Getriebeeingangswelle 5 eingeschraubt. Die Schrauben 25 werden rundum gleichmäßig angezogen, beispielsweise bis ein vorgegebenes Drehmoment erreicht ist. Dabei besteht die Möglichkeit, dass die Annäherung zwischen dem kleinen Flansch 14 der Wellenkupplung 1 und der Getriebeeingangswelle 5 durch nicht figürlich dargestellte Vorsprünge auf der axialen Endfläche 17 des kleinen Flansches 14 begrenzt wird. Auf diese Weise kann ein unzulässig starkes Quetschen des Dichtrings 33 vermieden werden. Bei geeigneter Dimensionierung der Nut 34 kann ein zu starker Druck auf den Dichtring 33 allerdings auch ohne die Vorsprünge verhindert werden. Mit dem Festziehen der Schrauben 25 ist die Ausbildung der Verbindung zwischen der Wellenkupplung 1 und der Getriebeeingangswelle 5 abgeschlossen und es wird eine entsprechende Verbindung zwischen der Wellenkupplung 1 und der Turbinenwelle 4 ausgebildet. Dies wird anhand der Figuren 7 und 8 erläutert.

Figur 7 zeigt das in Figur 3 dargestellte Ausführungsbeispiel der Wellenkupplung 1 in einer weiteren Schnittdarstellung. Ein vergrößerter Ausschnitt der Figur 7 ist in Figur 8 dargestellt. In den Figuren 7 und 8 ist der Schnitt jeweils entlang der in Figur 4 eingezeichneten Linie BB geführt. Somit ist die Verschraubung des großen Flansches 15 der Wellenkupplung 1 mit der Turbinenwelle 4 sichtbar. Diese Verschraubung wird durch die Schrauben 22 ausgebildet, die durch die axialen Durchgangsbohrungen 21 des großen Flansches 15 geführt sind und in Gewindebohrungen 35 der Turbinenwelle 4 eingeschraubt sind.

Insbesondere in Figur 8 ist ein Dichtring 36 erkennbar, der in einer radial außerhalb des Reibelements 29 umlaufenden Nut 37 des großen Flansches 15 angeordnet ist und axial gegen die benachbarte Stirnfläche der Turbinenwelle 4 gepresst wird.

Nachdem, wie anhand der Figuren 5 und 6 beschrieben, die Wellenkupplung 1 mit der Getriebeeingangswelle 5 verbunden wurde, werden der große Flansch 15 der Wellenkupplung 1 und das freie axiale Ende der Turbinenwelle 4 einander angenähert. In analoger Weise, wie für die Ausbildung der Verbindung zwischen der Wellenkupplung 1 und der Getriebeeingangswelle 5 beschrieben, wird der große Flansch 15 der Wellenkupplung 1 unter Zwischenschaltung des Reibelements 29 und des Dichtrings 33 mittels der Schrauben 22 mit der Turbinenwelle 4 verschraubt.

Auf diese Wiese wird mittels der Wellenkupplung 1 eine drehfeste Verbindung zwischen der Turbinenwelle 4 und der Getriebeeingangswelle 5 ausgebildet. Bei dieser Verbindung erfolgt die Momentübertragung nicht durch den Formschluss, welcher durch die Schrauben 22 und 25 ausgebildet wird. Stattdessen erfolgt die Momentübertragung durch reibschlüssige Verbindungen mittels der Reibelemente 26 und 29. Dies ist durch die hohen Reibwerte zwischen den Reibelementen 26 und 29 und den jeweils an die Reibelemente 26 und 29 angrenzenden Komponenten von wenigstens 0,65, insbesondere wenigstens 0,75 oder sogar wenigstens 0,8 möglich. Derart hohe Reibwerte lassen sich mit Hilfe von Reibelementen 26 und 29 erzielen, die harte Teilchen aufweisen, die auf einem Substrat angeordnet und/oder in das Substrat eingebettet sind. Die Teilchen sind insbesondere so hart, dass sie sich bei einem ausreichend hohen Anpressdruck in die Gegenfläche, d. h. in die Wellenkupplung 1 bzw. die Turbinenwelle 4 oder die Getriebeeingangswelle 5 eingraben und auf diese Weise extrem hohe Reibwerte erzeugen. Geeignete Materialien für die Teilchen sind Natur-Diamant, synthetischer Diamant, kubisches Bornitrid, Titancarbid, Siliziumkarbid, Wolframcarbid, Borcarbid usw. Als Trägermaterial für das Substrat - z. B. bei Ausbildung der Reibelemente 26 und 29 als eine Beschichtung - kommt insbesondere Stahl in Frage, beispielsweise eine der Stahlsorten 1.7225-42CrMo4, 1.5919-15CrNi6, 1.7131-16MnCr5, 1.6587-17CrNiMo6, 1.8519-31CrMoV9, 1.1191-Ck45, 1.0984-S500MC, 1.8974-S700MC, 1.4462-X2CrNiMoN22-5 usw. Als Substrat eignet sich beispielsweise Nickel, Kupfer, Zink, Kobalt, Chrom, Zinn usw. Die mit den Reibelementen 26 und 29 zusammenwirkenden Gegenflächen können insbesondere aus Stahl gefertigt sein, beispielsweise aus den Stahlsorten 1.7225-42CrMo4, 1.5919-15CrNi6, 1.7131-16MnCr5, 1.6587-17CrNiMo6, 1.8519-31CrMOV9, 1.1191-Ck45, 1.4317-G-X4CrNi134, 1.4122-X39CrMo17-1 usw. Ebenso können die Gegenflächen auch aus Guss gefertigt sein, beispielsweise aus EN-JS 1020-EN-GJS-400-18, EN-GJS 1050-EN-GJS-500-7, EN-JS 1070-EN-GJS-700-2, EN-JS 1090-EN-GJS-900-2 usw.

Alternativ zu der vorstehend beschriebenen Verbindung zwischen der Turbinenwelle 4 und der Getriebeeingangswelle 5 können mit der erfindungsgemäßen Wellenkupplung 1 auch Verbindungen zwischen anderen rotierenden Komponenten einer Wasserkraftanlage ausgebildet werden.

Bei einer Abwandlung der Erfindung sind die Reibelemente 26 und 29 nicht als separate Bauteile sondern als Beschichtungen ausgebildet, die insbesondere auf den axialen Endflächen 17 und 18 der Wellenkupplung 1 aufgebracht sein können.

### Bezugszeichenliste

- 1: Wellenkupplung
- 2: Wasserkanal
- 3: Turbine
- 4: Turbinenwelle
- 5: Getriebeeingangswelle
- 6: Getriebe
- 7: Trockenbereich
- 8: Durchführung
- 9: Getriebeausgangswelle
- 10: Generatorwelle
- 11: Generator
- 12: Ausgleichslager
- 13: Zwischenstück
- 14: Kleiner Flansch
- 15: Großer Flansch
- 16: Längsachse
- 17: Axiale Endfläche
- 18: Axiale Endfläche
- 19: Versteifungsrippe
- 20: Vertiefung
- 21: Axiale Durchgangsbohrung
- 22: Schraube
- 23: Vertiefung
- 24: Axiale Durchgangsbohrung
- 25: Schraube
- 26: Reibelement
- 27: Zentrale Lochung
- 28: Lochung
- 29: Reibelement
- 30: Zentrale Lochung
- 31: Lochung
- 32: Gewindebohrung
- 33: Dichtring
- 34: Nut
- 35: Gewindebohrung
- 36: Dichtring
- 37: Nut

## Patentansprüche

1. Wellenkupplung einer Wasserkraftanlage, die eine erste rotierende Komponente (5, 10) mittels Reibschluss drehfest mit einer zweiten rotierenden Komponente (4, 9) verbindet, mit
- einem ersten axialen Endstück (14), das eine erste axiale Endfläche (17) aufweist,
- einem zweiten axialen Endstück (15), das eine zweite axiale Endfläche (18) aufweist,
- einem Zwischenstück (13), das axial zwischen dem ersten axialen Endstück (14) und dem zweiten axialen Endstück (15) angeordnet ist, wobei
- an der ersten axialen Endfläche (17) ein erstes Reibelement (26) anliegt, das wenigstens bereichsweise radial nach innen über das Zwischenstück (13) übersteht und/oder an der zweiten axialen Endfläche (18) ein zweites Reibelement (29) anliegt, das wenigstens bereichsweise radial nach außen über das Zwischenstück (13) übersteht.

2. Wellenkupplung nach Anspruch 1, **dadurch gekennzeichnet, dass** das erste Reibelement (26) und/oder das zweite Reibelement (29) als ein abnehmbarer Reibkörper ausgebildet sind.

3. Wellenkupplung nach einem der vorhergehenden Ansprüche, **dadurch gekennzeichnet, dass** das erste Reibelement (26) und/oder das zweite Reibelement (29) in Umfangsrichtung segmentiert ausgebildet sind.

4. Wellenkupplung nach Anspruch 1, **dadurch gekennzeichnet, dass** das erste Reibelement (26) und/oder das zweite Reibelement (29) als eine Beschichtung ausgebildet sind.

5. Wellenkupplung nach einem der vorhergehenden Ansprüche, **dadurch gekennzeichnet, dass** das erste Reibelement (26) radial nach außen durch eine erste Dichtung (33) und/oder das zweite Reibelement (29) radial nach außen durch eine zweite Dichtung (36) abgedichtet sind.

6. Wellenkupplung nach einem der vorhergehenden Ansprüche, **dadurch gekennzeichnet, dass** das erste axiale Endstück (14) als ein erster Flansch ausgebildet ist, der wenigstens bereichsweise radial nach innen über das Zwischenstück (13) übersteht, und/oder das zweite axiale Endstück (15) als ein zweiter Flansch ausgebildet ist, der wenigstens bereichsweise radial nach außen über das Zwischenstück (13) übersteht.

7. Wellenkupplung nach einem der vorhergehenden Ansprüche, **dadurch gekennzeichnet, dass** im ersten axialen Endstück (14) in Unfangsrichtung aufeinander folgend erste axiale Durchgangsbohrungen (24) ausgebildet sind, und/oder im zweiten axialen Endstück (15) in Unfangsrichtung aufeinander folgend zweite axiale Durchgangsbohrungen (21) ausgebildet sind.

8. Wellenkupplung nach Anspruch 7, **dadurch gekennzeichnet, dass** über den Außenumfang des Zwischenstücks (13) verteilt mehrere Vertiefungen (20) ausgebildet sind, die mit den zweiten Durchgangsbohrungen (21) axial fluchten.

9. Wellenkupplung nach einem der vorhergehenden Ansprüche, **dadurch gekennzeichnet, dass** über den Außenumfang des Zwischenstücks (13) verteilt mehrere axial verlaufende Versteifungsrippen (19) ausgebildet sind.

10. Wellenkupplung nach einem der vorhergehenden Ansprüche, **dadurch gekennzeichnet, dass** die erste rotierende Komponente (5, 10) und die zweite rotierende Komponente (4, 9) unterschiedliche Durchmesser aufweisen.

11. Wellenkupplung nach einem der vorhergehenden Ansprüche, **dadurch gekennzeichnet, dass** das erste axiale Endstück (14), das zweite axiale Endstück (15) und das Zwischenstück (13) aus einem nicht rostenden Edelstahl gefertigt sind.

12. Wellenkupplung nach einem der vorhergehenden Ansprüche, **dadurch gekennzeichnet, dass** eine aus der ersten axialen Endfläche (17) und dem ersten Reibelement (26) und/oder eine aus der zweiten axialen Endfläche (18) und dem zweiten Reibelement (29) ausgebildete Reibpaarung einen Reibwert von wenigstens 0,65 aufweist.

13. Wellenkupplung nach einem der vorhergehenden Ansprüche, **dadurch gekennzeichnet, dass** die erste rotierende Komponente (5, 10) und die zweite rotierende Komponente (4, 9) jeweils als eine Welle ausgebildet sind.

14. Wasserkraftanlage mit einer ersten rotierenden Komponente (5, 10) und einer zweiten rotierenden Komponente (4, 9), die mittels einer Wellenkupplung (1) drehfest miteinander verbunden sind, **dadurch gekennzeichnet, dass** die Wellenkupplung (1) gemäß einem der vorhergehenden Ansprüche ausgebildet ist.

15. Wasserkraftanlage nach Anspruch 14, **dadurch gekennzeichnet, dass** der maximale Außendurchmesser der Wellenkupplung (1) kleiner oder gleich dem Außendurchmesser der ersten rotierenden Komponente (5, 10) oder der zweiten rotierenden Komponente (4, 9) ist.
